# EUROPEAN PATENT SPECIFICATION

(11) **EP 2 767 802 B1**
(45) Date of publication and mention of the grant of the patent: **08.06.2016**
(21) Application number: 13000822.0
(22) Date of filing: 18.02.2013
(51) Int. Cl.: G08G 1/00, G01C 21/34

(54) **Method and system for navigation**
Verfahren und System zur Navigation
Procédé et système de navigation

(43) Date of publication of application: 20.08.2014
(73) Proprietor: Harman Becker Automotive Systems GmbH, 76307 Karlsbad (DE)
(72) Inventor: Roth, Hans, 76187 Karlsruhe (DE); Preissner, Olaf, 73230 Kirchheim unter Teck (DE); Marti, Stefan, 94618-2329 Oakland California (US); Reifenrath, Christoph, 50374 Erftstadt (DE); Schedl, Manfred, 87471 Durach (DE); Ognibeni, Alexander, 50670 Köln (DE)
(74) Representative: Grünecker Patent- und Rechtsanwälte PartG mbB

(56) References cited:
- EP-A1- 1 168 275
- EP-A2- 1 251 475
- EP-A2- 1 339 247

## Description

The present invention relates to a method and a system for navigation of vehicles.

Methods for transporting a passenger by a plurality of vehicles are known from documents EP 1 251 475 A2 and EP 1 168 275 A1.

A method for dynamically informing several users about each other's positions is known from document EP 1 339 247 A1.

Methods for assisting a driver in finding a parking spot are known from documents US 8 063 797 B1, US 2007/040701 A1, DE102011101189 A1 and US 2012/200430 A1.

The document US 2002/0184062 A1 shows a vehicle management system. The vehicle management method and system is able to monitor and manage a fleet of vehicles with high efficiency and low cost. The management method includes the steps of providing a radio transmitter connected to a vehicle navigation system in each vehicle, providing a radio transmitter connected to a facility computer in a vehicle management facility, receiving information regarding use of a vehicle by the vehicle navigation system from the facility computer which is transmitted through the radio transmitters, monitoring usage of the vehicle and storing data thereof in a memory, and sending the stored data to the facility computer through the radio transmitters.

The object of the invention is to improve a method for navigation of vehicles.

Said object is achieved by a method with the features of independent claim 1. Advantageous refinements are the subject of dependent claims and are included in the description.

Therefore a method for navigation of vehicles is provided with at least one first vehicle and one second vehicle, wherein the vehicles belong to a community and exchange data with a server via a wireless connection.

The method comprises the
- transmitting a first current position of the first vehicle from the first vehicle to a server,
- transmitting a second current position of the second vehicle from the second vehicle to the server,
- determining a first route and a second route by means of the server,

The first route is determined from the first current position to a first final destination of the first vehicle. The second route is determined from the second current position to a second final destination of the second vehicle. A location connects the first route and the second route as a stop over destination for a passenger to change from first vehicle to the second vehicle. The location is included in the first route and in the second route.

The method further comprises the steps:
- transmitting the first route to the first vehicle, and
- transmitting the second route to the second vehicle.

The first vehicle may use the first route for route guidance. The second vehicle may use the second route for route guidance.

These features may lead to a plurality of advantages. Members of the community could use all vehicles of the community. With a high dense of vehicles in urban areas members could start a city trip instantly. Fuel and time for travelling is reduced. Members reach their destination earlier and the overall effectiveness of community traffic is increased.

Another aspect is an improved system for navigation of vehicles. The system is provided having the features of independent claim 10.

Advantageous refinements are included in the description.

Therefore a system for navigation of vehicles belonging to a community is least one first vehicle and one second vehicle and a server are connectable by means of wireless data transmission between the server and the first and second vehicle.

The first vehicle is configured to transmit a first current position of the first vehicle to the server. The second vehicle is configured to transmit a second current position of the second vehicle to the server.

The server is configured to determine a first route and a second route. The first route is defined from the first current position to a first final destination of the first vehicle. The second route is defined from the second current position to a second final destination of the second vehicle.

A location connects the first route and the second route as a stop over destination for a passenger to change from first vehicle to the second vehicle. The location is included in the first route and in the second route.

The server is configured to transmit the first route to the first vehicle and the second route to the second vehicle.

In the following advantageous embodiments are described.

According to one embodiment an enquiry may be transmitted from a device to the server. The enquiry may contain a current passenger position of a passenger and a passenger destination.

According to one embodiment a transport option of a transport of the passenger may be determined by means of the first vehicle and of the second vehicle to the passenger destination. The determination may be based on the current passenger position. The determination may be based on a current route of the first vehicle. The determination may be based on a current route of the second vehicle. The determination may be based on the first current position of the first vehicle. The determination may be based on the second current position of the second vehicle. The determination may be based on one or more first parameters of the transport option. The first parameters may be transmitted from the first vehicle to the server. The determination may be based on one or more second parameters of the transport option. The second parameters may be transmitted from the second vehicle to the server. The transport option may be displayed for inputting a selection.

According to one embodiment one of the first parameters and/or one of the second parameters may contain a mode value for a private mode without transport of passengers or a public mode with transport of passengers.

One of the first parameters and/or one of the second parameters may contain a distance value for a maximum detour.

One of the first parameters and/or one of the second parameters may contain an occupancy value for a number of vacant transport places of the vehicle.

One of the first parameters and/or one of the second parameters may contain a group index for an affiliation with a specific group of persons.

One of the first parameters and/or one of the second parameters may contain a settable profile of the driver for preferences. Such preferences may be a musical style and/or a driving style or the like.

According to one embodiment the first route and the second route may be determined, when the selection input is determined.

According to one embodiment the first route and the second route may be determined, when the selection input is determined and when a first confirmation by a first driver of the first vehicle and a second confirmation by a second driver of the second vehicle are determined.

According to one embodiment the location may be output as the first stopover in a first route guidance of the first route. According to one embodiment the location may be output as the second stopover in a second route guidance of the second route.

According to one embodiment information may be output to the passenger, the information being based on the location. A time count value may be output to the passenger until the location is reached.

The described embodiments are especially advantageous both individually and in combination. In this regard, all embodiments can be combined with one another. Some possible combinations are explained in the description of the exemplary embodiments shown in the figures. These possible combinations of the embodiments, depicted therein, are not definitive, however.

The invention will be described in greater detail hereinafter by exemplary embodiments using graphic illustrations.

In the drawing:
- FIG. 1: shows a schematic illustration of a system for navigation of vehicles;
- FIG. 2: shows a schematic illustration of a map view;
- FIG. 3: shows a schematic illustration of the wireless transmission;
- FIGS. 4a, 4b, and 4c: show schematic illustrations of selection options;
- FIG. 5: shows a schematic time diagram;
- FIG. 6: shows a schematic illustration of a display;
- FIG. 7: shows a block diagram;
- FIG. 8: shows a schematic three-dimensional illustration of a motor vehicle;
- FIG. 9: shows a block diagram;
- FIG. 10: shows a schematic view of a traffic having a plurality of vehicles; and
- FIG. 11: shows a schematic map view.

A rapid growth of urban population occurred in recent decades. In 2008, around the globe for the first time less people lived in rural than in urban areas. More than four hundred cities have more than one million and nineteen more than ten million inhabitants. In the forecast by 2050 more than seventy percent of the world population will live urban areas. In the mega cities of the future there will be an enormous need for mobility, that can't be satisfied with conventional means. This gap can be closed by the Urban Swarm Community Concept, which consistently uses the intelligence of the swarm. Using the Urban Swarm Community Concept a cutting-edge mobility community combines the advantages of public and individual transport, taxis, car-sharing and ride community concepts, avoiding their disadvantages. It offers maximum transport capacity by high utilization of vehicles and also allows a rapid change of vehicles. Potential passengers only need to enter their final destination, the rest is managed by the System. In this concept individuals may be booked on one or several vehicles to come from start point to final destination.

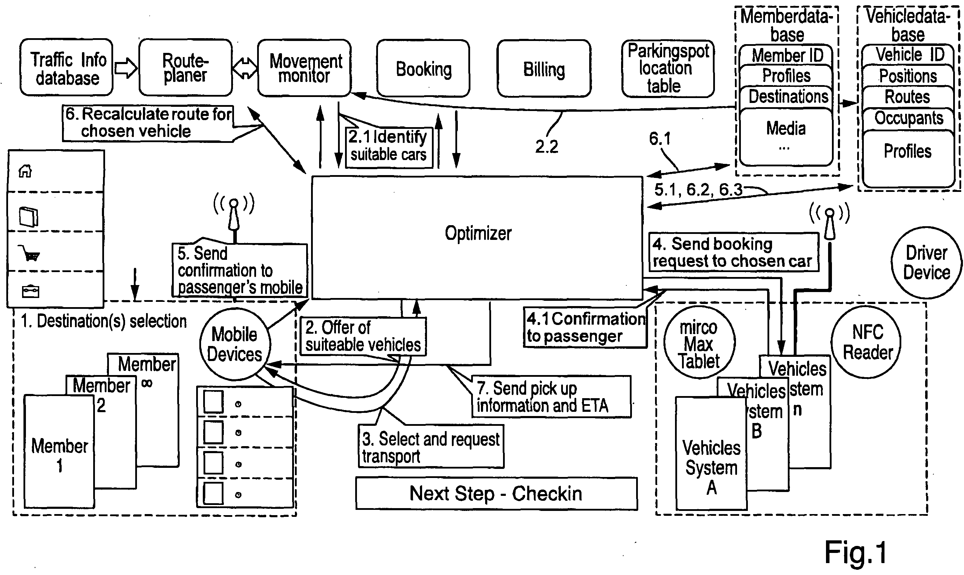

In FIG. 1 an overview of one embodiment of a system is provided, that uses swarm intelligence. Therefore a plurality of functions in FIG. 1 may be implemented in program running on one or more servers, which could be part of a cloud computing.

Core of the system of FIG. 1 is an optimizer function for organizing data traffic and calculations. Implemented functions may be a traffic info database having data of a road map, a route planer having a route calculation algorithm and a movement monitor having storage means for updating and tracking the positions of the member devices and vehicles. Also implemented functions may be booking having storage means e.g. for passenger transport, and billing for member vehicle usage and a parking spot location table having positions of vacancies for parking. Also implemented functions may be a member database and a vehicle database. The member database may have members' identifications, members' profiles, members' destinations and members' media. The vehicle database may have vehicles' identification, vehicles' positions, vehicles' routes, vehicles' occupants and vehicles' profiles.

Also member device functions on the left as well as specific member functions of a vehicle on the right are shown. According to one embodiment of FIG. 1 steps of a long-term booking process are described.

In a first step a member may select a destination, e.g. home, school market or office. The destination is sent as an enquiry to the optimizer by the mobile device of the member. The optimizer returns in a second step an offer of suitable vehicles, which may be shown in a table form on the display of the mobile device, having pictures and text and other information like known persons or driving time. Suitable vehicles may be determined based on the information in the movement monitor. Also billing requirements may have to be fulfilled for offering. In a third step the user selects at least one of the suitable offers and sends a request for transport.

In a fourth step the booking request is sent to the driver's mobile of the respective choice. The driver inputs an acknowledgement, if he agrees to transport the member, which is referred to as passenger in the following. Information from the member database and from the vehicle database may be provided for the request and confirmation and selection to the passenger's device and to the driver's device respectively. This confirmation is sent back to the optimizer and is forwarded to the passenger's mobile device. The booking is stored and monitored in the booking function. The optimizer also triggers the route planer to recalculate a route of the vehicle of choice, incorporating an additional stop for the passenger to enter the vehicle and/or an additional stop for the passenger to leave the vehicle. The routes stored in the vehicle database may be updated. In a seventh step after route recalculation pick up information and an estimated time of arrival is sent to the passenger.

Other process not shown in FIG. 1 may be a check-in, a check-out, short-term booking, dynamic wake-up call for a driver, dynamic wake-up call for a passenger, parking management and a private mode. E.g. after the long-term booking the next process would be the check-in of the passenger in the vehicle of choice.

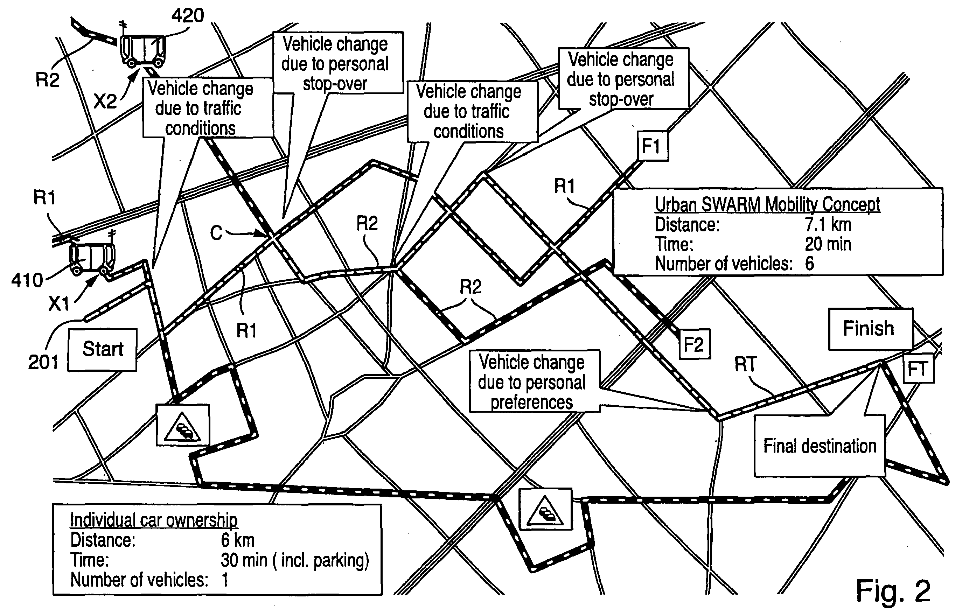

A map view is shown schematically in FIG. 2. The map view should clarify the different use of a swarm of vehicles versus an individual vehicle. Typically, a swarm consists of a large number of vehicles, but for greater clarity only a few vehicles of the swarm are shown in FIG. 2. Thus, a first vehicle 410 and a second vehicle 420 are shown in FIG. 2.

Also shown is a first current position X1 of first vehicle 410, which is determined, for example, by means of GPS signals and transmitted to server 300 according to FIG. 1. Likewise, a second current position X2 of second vehicle 420 is shown, which is also transmitted to server 300.

Also shown are a first route R1 and a second route R2, which are calculated by server 300. The server moreover calculates a large number of other routes of swarm participants, which for greater clarity are not shown in FIG. 2.

The first route R1 is determined from the first current position X1 to a first final destination F1 of first vehicle 410. The first final destination F1 is selected or input, for example, by the driver of first vehicle 410. The second route R2 is determined from the second current position X2 to a second final destination F2 of second vehicle 420. The second final destination F2 is selected or input, for example, by the driver of second vehicle 420.

Passenger 201 has also entered a trip destination FT, which in the exemplary embodiment of FIG. 2 he covers with six route sections by means of six different vehicles. The six route sections in this regard form his trip route RT to the trip destination FT. A second route section in this case is covered by first vehicle 410. A third route section is covered by second vehicle 420. The remaining necessary vehicles are not shown in FIG. 2 for the sake of greater clarity.

So that passenger 201 can utilize first vehicle 410 and then second vehicle 420, passenger 201 must change vehicles. A location C for changing vehicles connects first route R1 and second route R2. This location C is advantageously indicated as a stopover in the route guidance of first vehicle 410. In this regard, information on the exiting of passenger 201 is provided to the driver of first vehicle 410. Location C is advantageously also indicated as a stopover in the route guidance of second vehicle 420. In this case, information on the entry of passenger 201 is provided to the driver of second vehicle 420. Thus, location C is included in first route R1 of first vehicle 410 and in second route R2 of second vehicle 420. Location C in this case is an area where stopping of first vehicle 410 and second vehicle 420 is possible. For example, location C is an intersection, so that passenger 201 need only cross a street for a vehicle change.

Server 300 calculates both routes R1, R2 interdependently based on the trip route RT of passenger 201. First route R1 is transmitted to first vehicle 410 and second route R2 to second vehicle 420. Due to the Swarm mobility concept, in the exemplary embodiment of FIG. 2, passenger 201 can reach the trip destination FT within 20 minutes. Because of the high availability of travel options due to the swarm of vehicles, passenger 201 can also skip travel options, e.g., in order to take a break or to meet someone and then to continue traveling to the trip destination FT. In so doing, the server calculates a new trip route RT with new route sections of the current vehicles (not shown).

For comparison, the trip by means of a person's own motor vehicle from the start to the destination (finish) is also shown in FIG. 2. The traveler as the driver must now drive around a traffic jam at two places, shown in FIG. 2 by symbols. The traveler also loses a great deal of time at the destination when a parking place needs to be found. In the shown exemplary embodiment of FIG. 2, the traveler requires 30 minutes to reach the destination. With the current growth of traffic congestion in cities, individual transport will increasingly reach its limits, so that in the exemplary embodiment of FIG. 2 the time difference will diverge even more greatly.

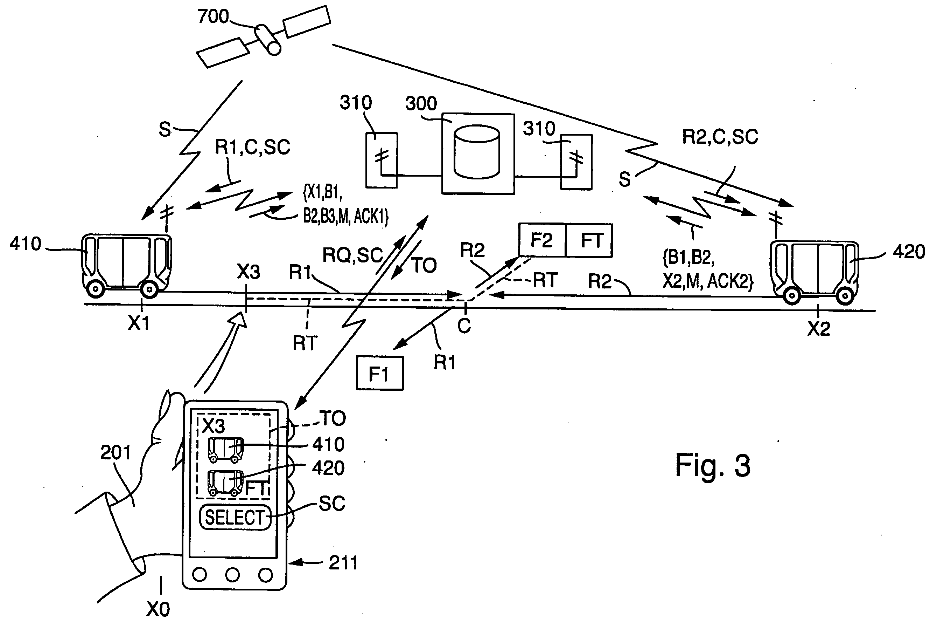

A further exemplary embodiment is illustrated in FIG. 3, in which a passenger 201 reaches a trip destination FT from his current position X0. In this case, passenger 201 uses a mobile device 211 to transmit an enquiry RQ to server 300 via a wireless connection. For the wireless connection, the server is connected, for example, to base station 310 of a wireless network (LTE, UMTS) in the network. The enquiry RQ contains a current passenger position X0 of passenger 201 and the passenger destination FT.

Server 300 moreover receives information on vehicles 410, 420. A first vehicle 410 determines its current position X1 based on satellite signals S from satellites 700 and transmits its current position X1 and its destination F1 and first parameters B1, B2, B3, M via a wireless connection to server 300. A second vehicle 420 determines its current position X2 based on satellite signals S from satellites 700 and transmits its current position X2 and its destination F2 and second parameters B1, B2, M via a wireless connection to server 300.

The first parameters B1, B2, B3, M and the second parameters B1, B2, M define whether the particular vehicle 410, 420 is suitable for transporting passenger 201. For example, one of the parameters defines a mode value M for a private mode without transport of passengers or a public mode with transport of passengers, whereby the mode value M can be set by the driver. In the exemplary embodiment of FIG. 3, the drivers of vehicles 410, 420 have set the public mode. Furthermore, an occupancy value B1, B2, B3 for the number of free transport places in motor vehicle 410, 420 is transmitted as a parameter. In the exemplary embodiment of FIG. 3, first vehicle 410 has transport places B1 and B2 and B3 free and second vehicle 420 transport places B1 and B2.

A transport option TO of a transport of passenger 201 to the passenger destination FT by means of first vehicle 410 and second vehicle 420 is determined by server 300. The determination of transport option TO is based on at least one of the current passenger position X0 and the first current position X1 of first vehicle 410 and the second current position X2 of second vehicle 420 and the first route R1 and the second route R2 and a first number of first parameters B1, B2, B3, M transmitted from first vehicle 410 for transport option TO and a second number of second parameters B1, B2, M transmitted from second vehicle 420 for transport option TO.

Transport option TO is transmitted by server 300 via a wireless connection to mobile device 211 of passenger 201. Mobile device 211 of passenger 201 has a display for showing transport option TO. Data such as the pick-up point X3 and/or information on the driver and/or vehicles and/or on the trip destination FT, for example, are shown on the displaying of transport option TO. Mobile device 211 enables a selection input SC of this transport option FT, for example, by icon and/or key command and/or voice command. In the exemplary embodiment of FIG. 3, the selection input SC can be made by touching the icon "SELECT" via a touchscreen. The selection input SC is transmitted back to server 300. Next, server 300 calculates the first route R1 of first vehicle 410 and the second route R2 of second vehicle 420 and the location C.

Passenger 201 after the selection SC goes from his current position X0 to pick-up point X3, which first vehicle 410 reaches at the same time or shortly thereafter and gets into first vehicle 410. First vehicle 410 drives by means of route guidance along route R1. Passenger 201 leaves at location C. Second vehicle 420 also reaches location C at the same time or shortly thereafter and passenger 201 gets into second vehicle 420. Second vehicle 420 drives further along second route R2 to the destination by means of route guidance. In the exemplary embodiment of FIG. 3, the destination F2 of second vehicle 420 corresponds to the trip destination FT of passenger 201.

As a departure from the exemplary embodiment of FIG. 3, a plurality of transport options TO for the selection input SC can be shown on mobile device 211 of passenger 201.

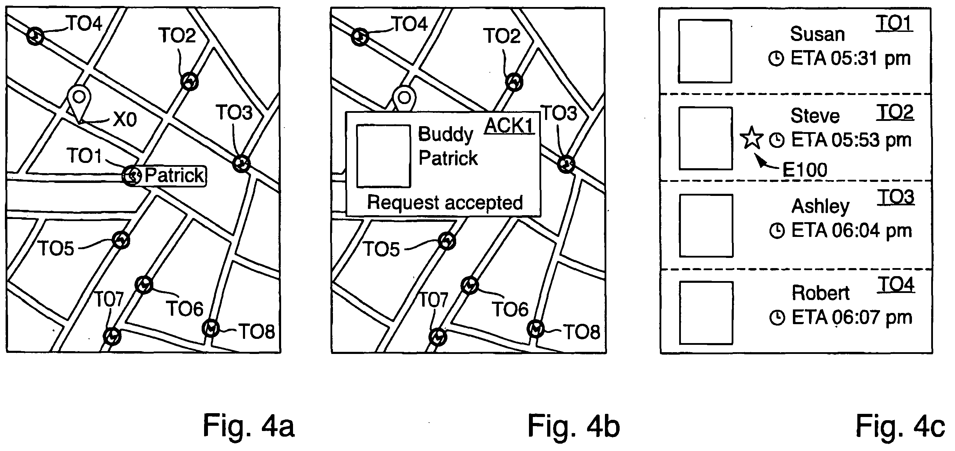

FIG. 4a shows an exemplary embodiment of a display of a plurality of transport options TO1, TO2, TO3, TO4, TO5, TO6, TO7, TO8 on a map. Each transport option TO1, TO2, TO3, TO4, TO5, TO6, TO7, T08 can be selected by touching the associated symbol on the map. The particular current position X0 is also shown. Additional information E100 is indicated for transport option TO1. In the exemplary embodiment of FIG. 4a, the driver for transport option TO1 is familiar to the user and his name is determined and displayed by means of a table entry.

If transport option TO1 is selected by a touchscreen input, a request RQ, according to FIG. 3, is sent to the vehicle. If the driver of the first vehicle 410 confirms the reservation request, a first acknowledgment message ACK1 is sent back. If the driver of the second vehicle 420 confirms the reservation request, a second acknowledgment message ACK2 is sent back. FIG. 4b shows an exemplary embodiment of a display for a confirmation ACK1 shown on the display of the passenger's device.

FIG. 4c shows an exemplary embodiment of a display of a plurality of transport options TO1, TO2, T03, TO4 for a later time by means of a list. In this case as well, additional information E100 is output, which in the exemplary embodiment of FIG. 4c identifies a familiar person as the driver.

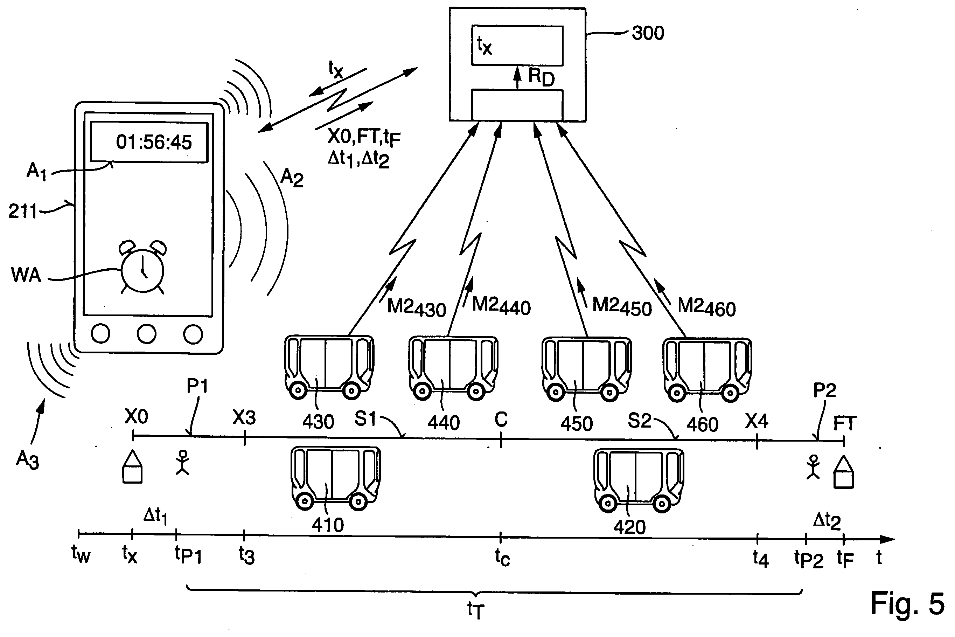

Another exemplary embodiment with a diagram is shown in FIG. 5. A user 201 as passenger 201 is to take a trip from the start position X0 to the trip destination FT. The section covered by the trip from the start position X0 to trip destination FT is shown in FIG. 5 by a bar with the positions X0, X3, C, X4, FT and the sections P1, S1, S2, P2. The system is suitable for schedule planning by the central management of a plurality of data by a server 300. To display the time course, a timeline with the times t_{W}, t_{X}, t_{P1}, t₃, t_{C}, t₄, t_{P2}, t_{F} is shown below the illustration of the trip sections. Passenger 201 uses a mobile device 211, for example, a smartphone or smartbook.

User 201 would like to be at appointment place FT at appointment time t_{F}. Mobile device 211 is configured to input the appointment time t_{F} and the appointment place FT and optional a time interval Δt1, Δt2 by user 201. In the exemplary embodiment of FIG. 5, two time intervals Δt1, Δt2 are entered. A first time interval Δt1 between a start time t_{X} and a time t_{P1} at the beginning of footpath P1 is entered. For example, the first time interval Δt1 takes into account a time period for leaving the house (e.g., 5 minutes). The second time interval Δt2, defined between a time of arrival t_{P2} after the end of footpath P2 and the appointment time t_{F}, takes into account, for example, a preparation time for the appointment (e.g., 5 minutes). The time intervals Δt1, Δt2 can also be set to zero.

Mobile device 211 is configured to determine a current position X0 of mobile device 211. For this purpose, mobile device 211 has, for example, a GPS receiver.

Server 300 can be connected to mobile device 211 via a network. For example, a UMTS connection or an LTE connection is used for this purpose. Mobile device 211 is configured to transmit the appointment time t_{F} and the appointment place FT and the current position X0 and the time intervals Δt1, Δt2 to server 300.

Server 300 is configured to determine traffic-related data RD as real-time data RD for at least one route section S1, S2 between the current position X0 and the appointment place FT. In the exemplary embodiment of FIG. 5, user 201 starts a short footpath P1 at the position X0 to location X3 where a first vehicle 410 transports user 201 as passenger 201 over a first route section S1 to location C. At location C passenger 201 changes to second vehicle 420 and is driven over a second route section S2 to location X4. Passenger 201 leaves at location X4 and walks on another short footpath P2 to appointment place FT. How rapidly the first route section S1 and the second route section S2 can be covered depends significantly on traffic flow in these route sections S1, S2. In the exemplary embodiment of FIG. 5, other vehicles 430, 440, 450, 460 are shown which drive on route sections S1, S2.

Server 300 is configured to determine traffic-related data RD of the particular route section S1, S2 based on an assessment of received vehicle-specific data M2₄₃₀, M2₄₄₀, M2₄₅₀, M2₄₆₀ of vehicles 430, 440, 450, 460. The vehicle-specific data are, for example, a speed value M2₄₃₀, M2₄₄₀, M2₄₅₀, M2₄₆₀ and/or an acceleration value and/or a value for the distance to a preceding and/or following vehicle and/or a value for route conditions and/or a vehicle density value. It is shown in the exemplary embodiment of FIG. 5 how vehicles 430, 440, 450, 460 each transmit a speed value M2₄₃₀, M2₄₄₀, M2₄₅₀, M2₄₆₀ to server 300 over a wireless connection.

Server 300 determines a travel time t_{T} based on the data. The time for footpaths P1, P2 in this regard is substantially independent of traffic. From the speed values, server 300 calculates, for example, an average speed in route sections S1, S2 and in association with the length of route sections S1, S2 server 300 calculates the travel time t_{T}. The start time t_{X} can now be calculated by server 300, for example, by subtracting the travel time t_{T} and subtracting the time intervals Δt1, Δt2 from the appointment time t_{F}.

Server 300 is configured, based on the appointment time t_{F} and the appointment place FT and the current position X0 and possibly available time intervals Δt1, Δt2 and the traffic-related real-time data RD, to calculate the start time t_{X} for traveling from current position X0 to the appointment place FT. The calculated start time t_{X} is sent by server 300 to mobile device 211. Server 300 is configured to update continuously the start time t_{X} based on the traffic-related data RD and to send it to mobile device 211. If the traffic situation in route sections S1, S2 changes, for example, due to black ice, this is taken into account in the calculation of the start time t_{X} and the start time t_{X} is accordingly adjusted forward.

Mobile device 211 is configured to output an alarm A1, A2, A3 based on the start time t_{X} and current time t. The alarm in this regard can be output in different ways. In the exemplary embodiment of FIG. 5, the alarm is indicated as a visual display A1 by a countdown. The display can blink in addition, for example, shortly before the start time t_{X} is reached. The alarm is output alternatively or in addition by an acoustic signal A2. The acoustic signal A2 is, for example, an alarm sound and/or a voice output. The alarm is output alternatively or in addition by a vibration A3 of mobile device 211.

In addition, a wake-up alarm WA can be set. In this regard, based on the start time t_{X} a wake-up time t_{W} can be specified by mobile device 211 and/or server 300. Mobile device 211 in this regard is configured to output the wake-up alarm WA, based on the wake-up time t_{W} and the current time t. The wake-up alarm also has, for example, an alarm sound.

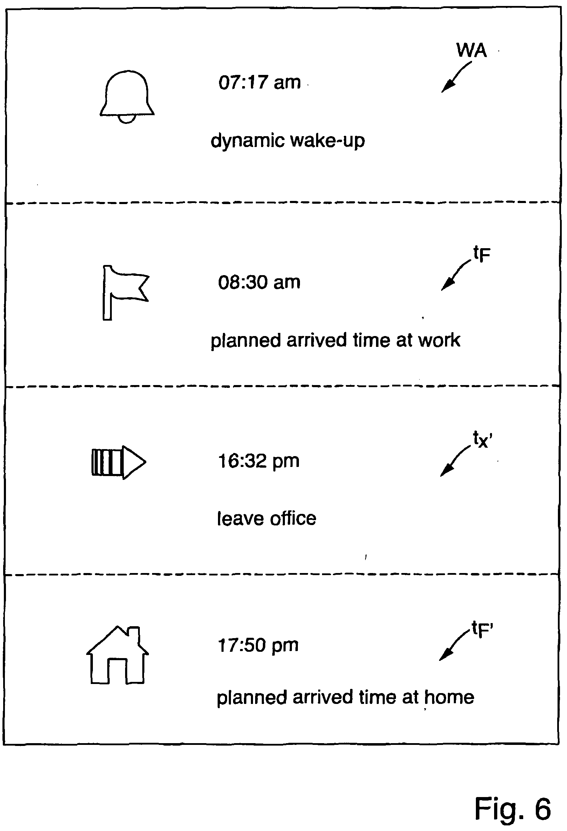

An exemplary embodiment with a display is shown schematically in FIG. 6. In this case, a visual wake-up alarm WA, an appointment time t_{F} at the office, and a start time t_{X}' for the return trip and an arrival time t_{F}' at home are indicated. The arrival time t_{F}' could also be referred to as appointment time.

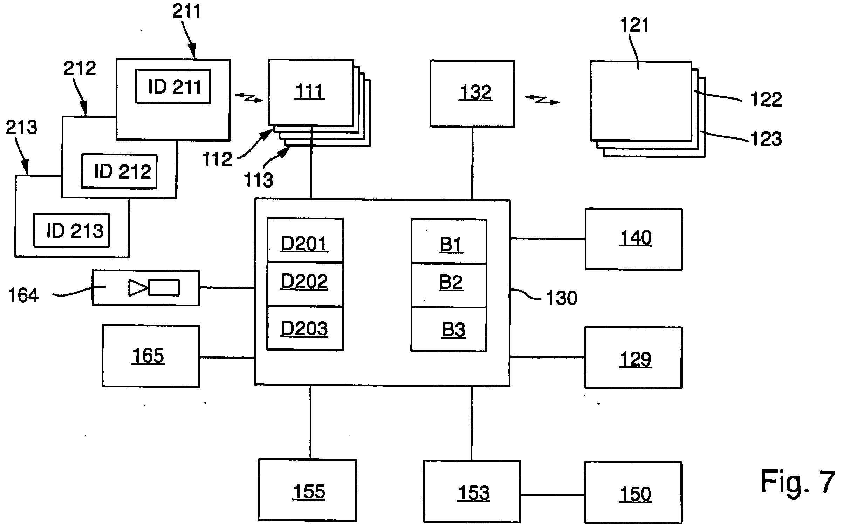

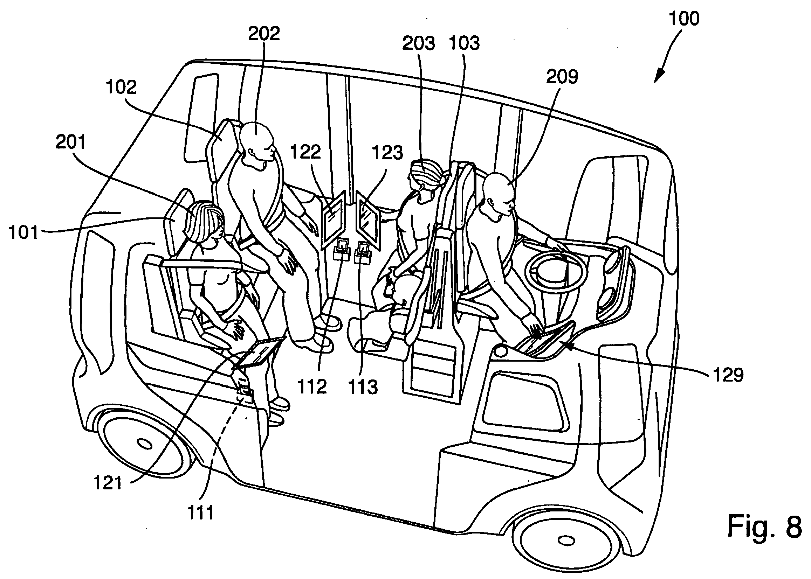

A system of a motor vehicle 100 is shown in FIGS. 7 and 8. The system has a central unit 130. Central unit 130 is connected to a driver terminal 129 for a driver 209 to output a route guidance. Driver terminal 129 is configured for inputting, for example, by means of sensors or a touchscreen. The driver can enter data via driver terminal 129 or he can operate functions.

In the exemplary embodiment of FIG. 8, the system has three near field communication devices 111, 112, 113. Each near field communication device 111, 112, 113 is installed in motor vehicle 100 in the area of a seat for a mobile device 211, 212, 213. Each near field communication device 111, 112, 113 is connected to central unit 130. Each near field. communication device 111, 112, 113 can create a communication link with mobile device 211, 212, 213 located in the receptacle.

In the exemplary embodiment of FIG. 8, the system has three display-input devices 121, 122, 123. Each display-input device 121, 122, 123 is installed in motor vehicle 100 for use by a passenger 201, 202, 203. Each display-input device 121, 122, 123 is connected to central unit 130. Near field communication device 111, 112, 113 and display-input device 121, 122, 123 are positioned for operation (operating) by passenger 201, 202, 203 at a passenger seat 101, 102, 103.

Central unit 130 of the system is configured to read identification data ID211, ID212, ID213 from mobile device 211, 212, 213 of passenger 201, 202, 203 via near field communication device 111, 112, 113. In the exemplary embodiment of FIG. 7, the respective identification data ID211, ID212, ID213 are transmitted to central unit 130 from each mobile device 211, 212, 213 of passenger 201, 202, 203 via near field communication devices 111, 112, 113. Driver 209 can allow the identification data ID211, ID212, ID213 to be displayed via terminal 129. It is possible that central unit 130 is configured to transmit the identification data ID211, ID212, ID213 or the information associated therewith to server 300. The information can then be used for billing, e.g. for paying for the traveled sections.

Central unit 130 is configured, based on the identification data ID211, ID212, ID213 from mobile devices 211, 212, 213, to activate display-input device 121, 122, 123 for use by passenger 201, 202, 203. By means of the activation, passenger 201, 202, 203 can now allow data to be displayed or make entries. In the exemplary embodiment of FIG. 7, passenger 201, 202, 203 is authorized to allow image data from camera 164 to be displayed. Likewise, music titles or video titles can be requested from a media database 155. Central unit 130 is configured, based on the identification data ID211, ID212, ID213, to permit access to data and/or services of central unit 130 of motor vehicle 100. Passenger 201, 202, 203 by the activation can also be permitted to access the infrastructure of vehicle 100, for example, a transceiver 140 of the wireless network connection (UMTS, LTE).

Alternatively or in combination, central unit 130 is configured, based on the identification data ID211, ID212, ID213 from mobile devices 211, 212, 213, to transmit passenger-specific data D201, D202, D203 from central unit 130 for displaying on display-input device 121, 122, 123. In the exemplary embodiment of FIG. 7, passenger-specific data D201, D202, D203 are stored or generated in central unit 130. The passenger-specific data D201, D202, D203 have, for example, specific instructions for route guidance for passenger 201, 202, 203. For example, the passenger-specific data D201, D202, D203 have a time counter until passenger 201, 202, 203 leaves motor vehicle 100 at a stop of the route guidance. The time counter is displayed by display-input device 121, 122, 123.

In addition, passenger 201, 202, 203 is provided with the convenient option of accessing his own data, in that central unit 130 is configured, based on the identification data ID211, ID212, ID213, to permit access to data and/or services of mobile device 211, 212, 213 via near field communication device 111, 112, 113. For example, email can be read from mobile device 211, 212, 213 via near field communication device 111, 112, 113.

An occupancy value B1, B2, B3 for the particular seat 101, 102, 103 is changed in central unit 130, based on the identification data ID211, ID212, ID213. As soon as a passenger 201, 202, 203 identifies himself by means of mobile device 211, 212, 213 and the identification data ID211, ID212, ID213 via the particular near field communication device 111, 112, 113, the associated occupancy value B1, B2, B3 is set to "occupied." It is also possible that seat 201, 202, 203 has an occupancy sensor 165, whereby the occupancy value B1, B2, B3 is set based on the sensor data of occupancy sensor 165. Central unit 130 is configured to provide the occupancy value B1, B2, B3 upon an inquiry by server 300 and occupancy values B1, B2, B3 are then transmitted from central unit 130 to server 300. The rider capacities are thus available to server 300 in real time. So that passenger 201 is informed in a timely manner about changing vehicles before location C is reached according to FIG. 3, in the embodiment according to the invention of FIG. 7 central unit 130 is configured, based on the identification data ID211, ID212, ID213, to display a map by means of display-input device 121, 122, 123 with the current position of motor vehicle 100, 410 and/or a position of another motor vehicle 420, whereby the other motor vehicle 420 is assigned a trip route RT of passenger 201. To connect each display-input device 121, 122, 123 with central unit 130, the system has a WiFi access point 132 for a wireless connection. Moreover, other devices, for example, brought along by a passenger 201, 202, 203, can be included in the system via WiFi access point 132. To output voice prompts and/or entertainment media, the system of the exemplary embodiment of FIG. 7 has a number of audio amplifiers 153 and a number of loudspeakers 150.

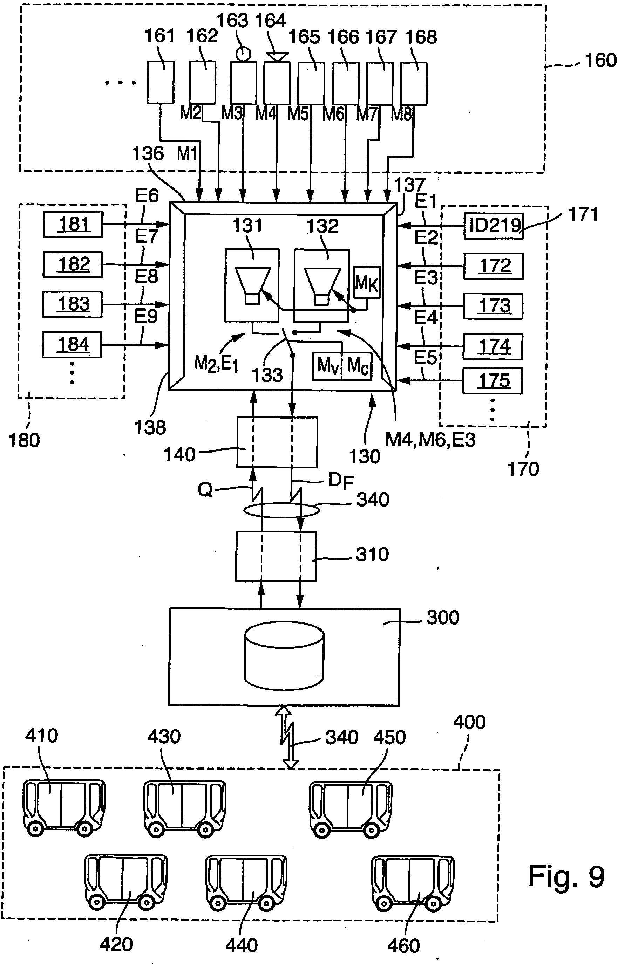

FIG. 9 shows other functions of a system of a motor vehicle 100 in communication with a server 300. The system again has a central unit 130. The system has a transceiver 140 for the wireless transmission of data DF from motor vehicle 100 via a wireless connection 340 of a network, e.g., over a wireless base station 310, to server 300. In addition, a plurality of other vehicles 410, 420, 430, 440, 450, 460, which belong to a community 400, can exchange data with server 300 via a wireless connection 340.

Central unit 130 of the present system has an interface 136 for receiving measured data M1, M2, M3, M4, M5, M6, M7, M8 from measurement sensors 161, 162, 163, 164, 165, 166, 167, 168 of motor vehicle 100. For example, a measurement sensor is a camera 164 and/or a radar device 161 and/or a speed sensor 162 and/or a microphone 163 and/or an occupancy sensor 165 and/or a position sensor 166 and/or a street condition sensor/vibration sensor 168 and/or a temperature sensor 167 or the like.

In the exemplary embodiment of FIG. 9, central unit 100 of the system has an interface 137, 138 for receiving input data E1, E2, E3, E4, E5, E6, E7, E8, E9 of an input by a driver 209 by means of an input device 129 of motor vehicle 100. Input device 129 of driver 209 can also be called the driver terminal 129. The input data in the exemplary embodiment of FIG. 9 have a driver identification E1 with the identification data ID219 and/or a driving style category E3 and/or a group definition E4 and/or a music profile E2 and/or a driving destination E5 and/or a number of available places E6 and/or an input maximum speed E7 and/or a vehicle identification E9 or the like. A number of connected input devices 170, 180 and/or memories 171, 172, 173, 174, 175, 181, 182, 183, 184 are provided for this purpose.

Central unit 130 is configured to activate a private mode M_{V} or a public mode M_{c}. The public mode M_{c} is used here for information for other participants, who, e.g., as passengers require a ride or as a driver of another vehicle would like to be informed about the local situation, for example, by means of image data from camera 164. The private mode Mᵥ, in contrast, makes it possible for driver 209 to protect his privacy, when, e.g., exclusively family members travel in the vehicle.

Central unit 130 in the private mode Mᵥ is configured to activate a first configurable filter 131. A first selection of measured data M2 and/or of input data E1 for transmission by transceiver 140 is released by means of the first configurable filter 131. In the exemplary embodiment of FIG. 9, the speed data M2 of a speed sensor 162 and a driver identification E1 are released. The first configurable filter 131 is shown in FIG. 9 as a function symbol and implemented, for example, by authorization software in central unit 130.

Central unit 130 in the public mode M_{c} is configured to activate a second configurable filter 132. A second selection of measured data M4, M6 and/or of input data E3 for transmission by transceiver 140 is released by means of the second configurable filter 132. In the exemplary embodiment of FIG. 9, in the public mode M_{c} the image data M4 of camera 164 and the position data M6 from position sensor 166 and a driving style category E3 are released for transmission. The second configurable filter 132 is shown in FIG. 9 as a function symbol and implemented, for example, by authorization software in central unit 130. The activation of the first configurable filter 131 or second configurable filter 132 is symbolized in FIG. 9 by a switch 133.

In the exemplary embodiment of FIG. 9, central unit 130 has a configuration mode M_{K}. Central unit 130 is configured to activate in the configuration mode M_{K} an input mask to configure the first configurable filter 131 and/or second configurable filter 132. Alternatively, the configuration of filters 131, 132 can be fixedly predetermined or programmed via a connection.

Central unit 130 is configured to transmit measured data M2, M4, M6 and/or input data E1, E3 released by means of the first configurable filter 131 or second configurable filter 132, when an inquiry Q is received over transceiver 140 about the particular measured data M2, M4, M6 and/or input data E1, E3. For example, camera 164 is selected by the request from a vehicle 440 of the community and then the image data M4 are transmitted via server 300 to vehicle 440 and displayed there.

The enormous need for mobility will lead to an advanced management of parking spaces. This will be reached by the Urban Swarm Community Concept, which consistently uses the intelligence of the swarm. In the following the swarm is used to manage the parking in city streets.

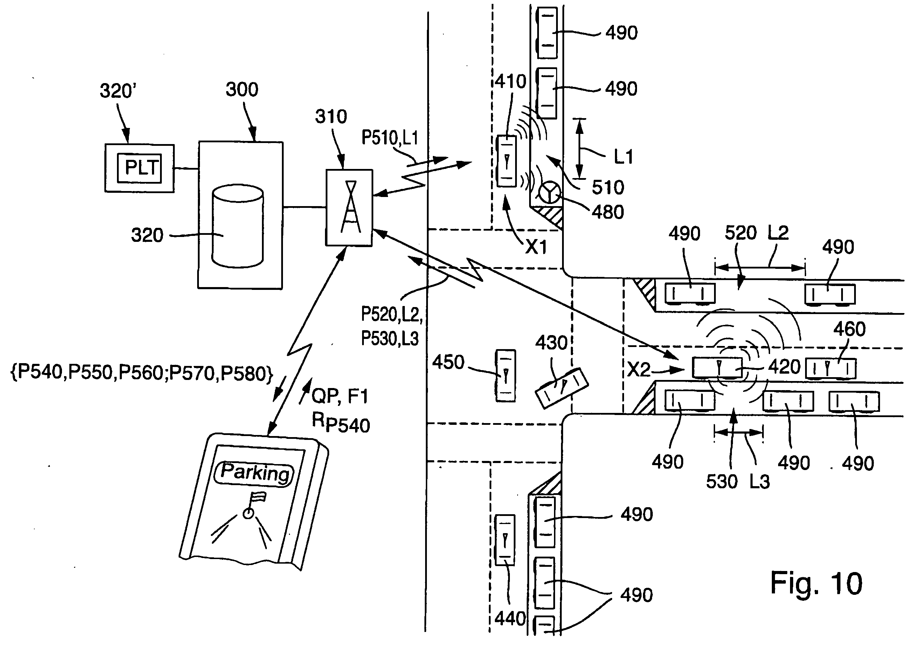

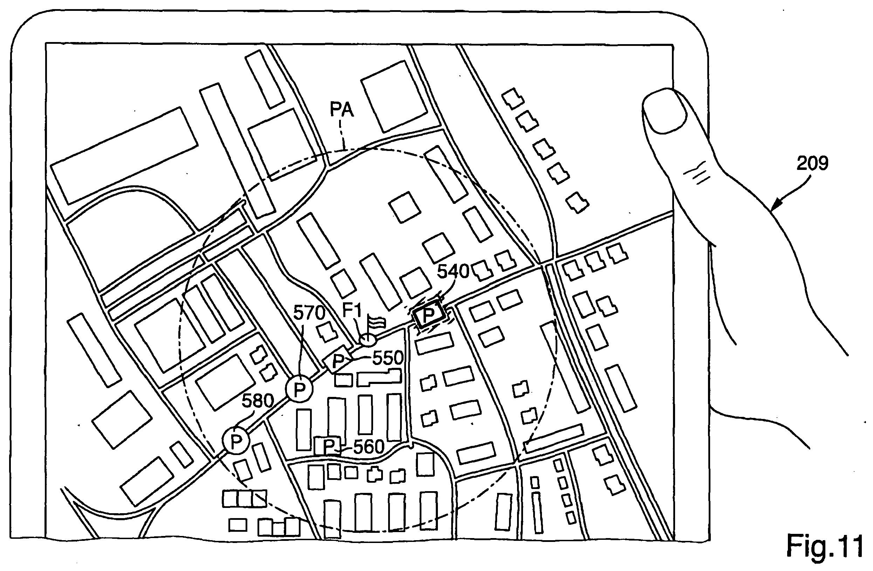

As shown in the FIGS. 10 and 11 one embodiment provides a system and a method to identify quasi real time vacancies for parking at the roadside as they occur randomly in the cities. These vacancies are made available to other traffic members in the community of the swarm. Such a member can be guided to such vacancy.

According to the invention, a method for navigation is based on a plurality of vehicles 410, 420, 430, 440, 450, 460. The vehicles 410, 420, 430, 440, 450, 460 shown in FIG. 10 are members of the community. Each vehicle 410, 420, 430, 440, 450, 460 is connectable to a server 300 via a radio communication link. In FIG. 10 a base station 310 of a radio communication network is shown, which is connected to the server 300. The server 300 is not only specified as a hardware unit, but also could be a virtual server or be part of cloud.

Each of the plurality of vehicles 410, 420, 430, 440, 450, 460 concurrently determines its current position X1, X2. In FIG. 10 all vehicle 410, 420 are moving. The vehicles 490 are objects. The vehicles 490 and the other object 480 are not moving and are parking or stationary. In FIG. 10 three vacancies 510, 520, 530 for parking are shown. These vacancies 510, 520, 530 are a gap between two parked vehicles 490 or between a parked vehicle 490 and the other object 480, e.g. a flower tub. In one embodiment shown in FIG. 10 a vehicle 410 is currently determining one vacancy 510 for parking based on recognized objects 480, 490 at the roadside. The system of the vehicle 410 has an object recognition device 161, 164 as shown in FIG. 7. According to one embodiment of FIG. 7 a video camera 164 and/or a radar sensor 161 are an essential part of an object recognition device..As shown in FIG. 10 another vehicle 420 is currently determining one vacancy 520 for parking based on recognized objects 490 at the left roadside and one vacancy 530 for parking based on recognized objects 490 at the right roadside.

The vehicle 410 may determine its current position X1 based on GPS-satellite signals. Depending on its current position X1 the vehicle 410 may determine the position P510 of the vacancy. Correspondingly the vehicle 420 is determining positions P520 and P530 of the vacancies 520, 530 based on its current position X2. As shown in FIG. 10 both vehicles 410, 420 are configured to transmit the positions P510, P520, P530 of the vacancies 510, 520, 530 together with the length L1, L2, L3 of each vacancy 510, 520, 530 to the connected server 300 via the base station 310.

The vacancies 510, 520, 530 for parking are received by the server 300. The server 300 enables the storing of the positions P510, P520, P530 of the vacancies 510, 520, 530 in an internal storage 320 or external storage 320' connected to the server 300. The storage may be organized as a database. The aforementioned steps describe how the vacancies 510, 520, 530 for parking are fed into the storage 320, 320'. In the following the steps concerning the request and retrieval of the positions P510, P520, P530 of the vacancies 510, 520, 530 are described.

According to one embodiment in FIGS. 10 and 11 an input by a user 209 of a query QP is determined. The query QP concerns vacancies for parking. The query QP together with a final destination F1 is transmitted from the user 209 to the server 300 via the base station 310. In the easiest case positions P540, P550, P560, P570, P580 of vacancies 540, 550, 560, 570, 580 are transmitted from the server 300 to the user 209. FIG. 11 shows a map with an area PA around the final destination F1. Positions P540, P550, P560, P570, P580 of vacancies 540, 550, 560, 570, 580 are shown by parking symbols within the area PA. The symbols may further be used for navigation. According to one embodiment shown in FIG. 11 a selection of a vacancy 540 for parking is determined, if the user 209 is touching the associated symbol. The position P540 of the vacancy 540 is set to be a new final destination P540. The route guidance to the new final destination P540 is started afterwards. It is also possible to calculate a round tour passing several or all of the positions P540, P550, P560, P570, P580 of vacancies 540, 550, 560, 570, 580, e.g. after reaching the final destination F1. After reaching the vacancy an occupation information may be sent from the user 209 to the server 300, if the position P540 is occupied by another vehicle or if a reaching of the position P540 of the vacancy 540 for parking by the user 209 is determined. After the server 300 has received the occupation information the stored position P540 may be deleted in the storage 320, 320' by the server 300. According to one embodiment the vacancies 540, 550, 560, 570, 580 for parking may be concurrently updated. The updating may be terminated, when a parking of the vehicle of the user 209 is detected or if the user switches off the updating, e.g. by a respective input. The area PA may be determined geographically, e.g. by determining each distance to the final destination F1 and comparing it with an area threshold. Alternatively the area PA is defined by a number of closest vacancies, e.g. the position of the ten closest vacancies define the area PA.

According to one embodiment the user 209 in FIG. 11 may select a vacancy for reservation. First a selection for reservation is determined, e.g. if the user 209 is touching a symbol of one vacancy for parking. Afterwards a reservation information R_{P540} is transmitted from the user 209 to the server 300 as shown in FIG. 10. E.g. for a period of time this vacancy is not retrievable for other members of the community.

To prevent misuse of the data gathered by the community the access may be limited. According to one embodiment an authentication of the user 209 to be a member of a group legitimated to retrieve vacancies 540, 550, 560, 570, 580 occurs. The positions P540, P550, P560, P570, P580 are transmitted only after the authentication is successfully completed.

According to one embodiment of FIG. 10 a length L1, L2, L3 of each vacancy 510, 520, 530 is determined and transmitted along with each position P510, P520, P530 from the respective vehicle 410, 420 to the connected server 300. Based on the request received the server 300 may transmit only that vacancies suitable for the user 209. Alternatively all positions of all vacancies are transmitted to the user along with the respective length of each vacancy. In this case the vacancies may be selected by a user's program. In each case each vacancy may be selected depending on its lengths L1, L2, L3. After selection only fitting vacancies may be displayed for navigation.

In dense populated urban areas a management of vacancies for parking is possible. According to the invention, a vacancy allocation is determined by minimizing walking distances between destinations F1 and the positions of the vacancies 540, 550, 560, 570, 580 for a plurality of vehicles having destinations adjacent to each other. Next the positions P540, P550, P560, P570, P580 of vacancies 540, 550, 560, 570, 580 in each area PA are transmitted to the vehicle based on the vacancy allocation.

According to one embodiment the behaviour of other vehicles, which are not a member of the community are taken into account. Additionally a point in time of the determination of the vacancy 510, 520, 530 may be determined and the point in time may be stored along with the position P510, P520, P530 by the server 300. Afterwards the positions P540, P550, P560, P570, P580 of vacancies 540, 550, 560, 570, 580 and respective points of time are transmitted from the server 300 to the user 209. The points of time could be used for navigation in several ways. In FIG. 11 visualization is shown. Using at least one time threshold vacancies may be categorized comparing a difference of the points of time and the current time with the at least one time threshold. In FIG. 11 three categories are shown, wherein the vacancy 540 has the youngest point of time and the vacancies 570, 580 are the oldest ones. Another threshold - e.g. 24 hours - may be used to cancel vacancies. Alternatively recognitions of a vacancy may be counted and compared with counting thresholds to categorize vacancies.

If parking in a vacancy is not allowed e.g due to traffic regulations, the user 209 may input respective information. An input associated with a cancelation of a vacancy by the user 209 may be determined. Based on the determined cancelation input respective data may be sent to the server and information concerning parking prohibition may be stored.

The invention is not limited to the shown embodiment variants in FIGS. 1 through 11. For example, it is possible to combine various explained functions of the system. It is likewise possible to provide different functions for other applications, for example, a fleet of trucks.

## Claims

1. A method for navigation of vehicles (100, 410, 420, 430, 440, 450, 460) with at least one first vehicle (410) and one second vehicle (420) wherein the vehicles (100, 410, 420, 430, 440, 450, 460) belong to a community (400) and exchange data with a server (300) via a wireless connection (340), the method comprising the steps:
transmitting a first current position (X1) of the first vehicle (410) from the first vehicle (410) to the server (300),
transmitting a second current position (X2) of the second vehicle (420) from the second vehicle (420) to the server (300),
determining a first route (R1) and a second route (R2) by means of the server (300),
wherein the first route (R1) is determined from the first current position (X1) to a first final destination (F1) of the first vehicle (410),
wherein the second route (R2) is determined from the second current position (X2) to a second final destination (F2) of the second vehicle (420),
wherein a location (C) connects the first route (R1) and the second route (R2)
as a stop over destination such that a passenger (201) is able to change from
first vehicle (410) to the second vehicle (420),
wherein the location (C) is included in the first route (R1) and in the second route (R2),
transmitting the first route (R1) to the first vehicle (410),
transmitting the second route (R2) to the second vehicle (420), **characterized in that** the method further
comprises the steps: displaying, on a
display of a central unit of the first vehicle (410), a map with the current position of the first vehicle (410) and the current position of the second vehicle (420) informing the passenger (201) about changing vehicles (410, 420) before the location (C) is reached, and
calculating a vacancy allocation of vacancies for parking for vehicles of the community (400) by minimizing walking distances between destinations and the positions of the vacancies for a plurality of vehicles having destinations adjacent to each other, and
transmitting positions of the vacancies in an area around the stop over destination (C) based on the vacancy allocation from the server (300) to the first vehicle (410) and the second vehicle (420) for navigation.

2. The method according to claim 1, comprising the steps:
transmitting an enquiry (RQ) from a device (211) to the server (300), the enquiry (RQ) containing a current passenger position (X0) of the passenger (201) and a passenger destination (FT),
determining a transport option (TO) of a transport of the passenger (201) by means of the first vehicle (410) and of the second vehicle (420) to the passenger destination (FT), the determination being based on at least one of
the current passenger position (X0) and
the first current position (X1) of the first vehicle (410) and
the second current position (X2) of the second vehicle (420) and
a current route of the first vehicle (410) and
a final destination (F1) of the first vehicle (410) and
a current route of the second vehicle (420) and
a final destination (F2) of the second vehicle (420) and
one or more first parameters (B1, B2, B3, M, E2, E3, E4, E5) of the transport option (TO), the first parameters (B1, B2, B3, M, E2, E3, E4, E5) being transmitted from the first vehicle (410) to the server (300), and
one or more second parameters (B1, B2, B3, M, E2, E3, E4, E5) of the transport option (TO), the second parameters (B1, B2, B3, M, E2, E3, E4, E5) being transmitted from the second vehicle (420) to the server (300), displaying the transport option (TO) for inputting a selection (SC).

3. The method according to claim 2, one of the first parameters (B1, B2, B3, M, E2, E3, E4, E5) and/or one of the second parameters (B1, B2, B3, M, E2, E3, E4, E5) contains
a mode value (M) for a private mode (M_{V}) without transport of passengers or a public mode (M_{C}) with transport of passengers, and/or
a distance value (E5) for a maximum detour and/or
an occupancy value (B1, B2, B3) for a number of vacant transport places (101, 102, 103) of the vehicle (100, 410, 420) and/or
a group index (E4) for an affiliation with a specific group of persons and/or
a settable profile (E2, E3) of the driver (209) for preferences.

4. The method according to one of claims 2 or 3, comprising the step:
determining the first route (R1) and the second route (R2), when the selection input (SC) is determined, and particularly when a first confirmation (ACK1) by a first driver of the first vehicle (410) and a second confirmation (ACK2) by a second driver of the second vehicle (420) are determined.

5. The method according to one of the preceding claims, comprising the steps:
outputting the location (C) as the first stopover in a first route guidance of the first route (R1), and
outputting the location (C) as the second stopover in a second route guidance of the second route (R2).

6. The method according to one of the preceding claims, comprising the step:
outputting information to the passenger (201), the information being based on the location (C), in particularly a time count value until the location (C) is reached.

7. The method according to claim 1, comprising the steps:
displaying a map and displaying a plurality of transport options (TO1, TO2, TO3, TO4, TO5, TO6, TO7, TO8) on the maps, and
selecting one of the transport options (TO1, TO2, TO3, TO4, TO5, TO6, TO7, TO8) by touching an associated symbol on the map.

8. The method according to claims 2 and 8 comprising the step:
sending a request to the first vehicle (410) for driver's confirmation, if a transport option (TO1) is selected.

9. The method according to claims 2 and 8, comprising the step:
sending a request to the second vehicle (420) for driver's confirmation, if a transport option (TO1) is selected.

10. A system for navigation of vehicles (100, 410, 420, 430, 440, 450, 460) belonging to a community (400) and exchanging data with a server (300) via a wireless connection (340), the system comprising at least one first vehicle (410) and one second vehicle (420), and the server (300), connectable by means of wireless data transmission to the first vehicle (410) and the second vehicle (420),
wherein the first vehicle (410) is configured to transmit a first current position (X1) of the first vehicle (410) to the server (300),
wherein the second vehicle (420) is configured to transmit a second current position (X2) of the second vehicle (420) to the server (300),
wherein the server (300) is configured to determine a first route (R1) and a second route (R2),
wherein the first route (R1) is defined from the first current position (X1) to a first final destination (F1) of the first vehicle (410),
wherein the second route (R2) is defined from the second current position (X2) to a second final destination (F2) of the second vehicle (420),
wherein a location (C) connects the first route (R1) and the second route (R2) as a stop over destination such that a passenger (201) is able to change from first vehicle (410) to the second vehicle (420),
wherein the location (C) is included in the first route (R1) and in the second route (R2),
wherein the server (300) is configured to transmit the first route (R1) to the first vehicle (410) and the second route (R2) to the second vehicle (420),
**characterized in that** the first unit (410) comprises a central unit configured to display, on a display of the central unit, a map with the current position of the first vehicle (410) and a current position of the second vehicle (420) informing the passenger (201) about changing vehicles (410, 420) before the location (C) is reached, and
wherein the server (300) is configured to calculate a vacancy allocation of vacancies for parking for vehicles of the community (400) by minimizing walking distances between destinations and the positions of the vacancies for a plurality of vehicles having destinations adjacent to each other, and
wherein the server (300) is configured to send positions of the vacancies in an area around the stop over destination (C) based on the vacancy allocation to the first vehicle (410) and the second vehicle (420) for navigation.

## Patentansprüche

1. Verfahren zur Navigierung von Fahrzeugen (100, 410, 420, 430, 440, 450, 460) mit mindestens einem ersten Fahrzeug (410) und einem zweiten Fahrzeug (420), wobei die Fahrzeuge (100, 410, 420, 430, 440, 450, 460) zu einer Gemeinschaft (400) gehören und über eine Drahtlosverbindung (340) Daten mit einem Server (300) austauschen, wobei das Verfahren die folgenden Schritte umfasst:
Übertragen einer ersten aktuellen Position (X1) des ersten Fahrzeugs (410) von dem ersten Fahrzeug (410) an den Server (300),
Übertragen einer zweiten aktuellen Position (X2) des zweiten Fahrzeugs (420) von dem zweiten Fahrzeug (420) an den Server (300),
Bestimmen einer ersten Route (R1) und einer zweiten Route (R2) mit Hilfe des Servers (300),
wobei die erste Route (R1) von der ersten aktuellen Position (X1) zu einem ersten Endziel (F1) des ersten Fahrzeugs (410) bestimmt wird,
wobei die zweite Route (R2) von der zweiten aktuellen Position (X2) zu einem zweiten Endziel (F2) des zweiten Fahrzeugs (420) bestimmt wird,
wobei eine Position (C) die erste Route (R1) und die zweite Route (R2) als Zwischenziel miteinander verbindet, sodass ein Fahrgast (201) in der Lage ist, von dem ersten Fahrzeug (410) zu dem zweiten Fahrzeug (420) zu wechseln,
wobei die Position (C) in der ersten Route (R1) und in der zweiten Route (R2) enthalten ist,
Übertragen der ersten Route (R1) an das erste Fahrzeug (410),
Übertragen der zweiten Route (R2) an das zweite Fahrzeug (420),
**dadurch gekennzeichnet, dass** das Verfahren ferner die folgenden Schritte umfasst:
Anzeigen einer Karte mit der aktuellen Position des ersten Fahrzeugs (410) und der aktuellen Position des zweiten Fahrzeuges (420), die den Fahrgast (201) über den Wechsel der Fahrzeuge (410, 420) informiert, bevor die Position (C) erreicht ist, auf einer Anzeige einer Zentraleinheit des ersten Fahrzeugs (410); und
Berechnen einer Leerstellenzuordnung von Parkleerstellen für Fahrzeuge der Gemeinschaft (400) durch Verringern der zu Fuß zurückzulegenden Entfernungen zwischen den Zielen und den Positionen der Leerstellen für eine Mehrzahl von Fahrzeugen, die aneinander angrenzende Ziele aufweisen; und
Übertagen der Positionen der Leerstellen in einem Bereich um das Zwischenziel (C) herum auf Grundlage der Leerstellenzuordnung von dem Server (300) an das erste Fahrzeug (410) und das zweite Fahrzeug (420) zur Navigation.

2. Verfahren nach Anspruch 1, umfassend die folgenden Schritte:
Übertragen einer Anfrage (RQ) von einer Vorrichtung (211) an den Server (300),
wobei die Anfrage (RQ) eine aktuelle Fahrgastposition (X0) des Fahrgasts (201) und
ein Fahrgastziel (FT) enthält,
Bestimmen einer Transportoption (TO) eines Transports des Fahrgasts (201) mit Hilfe des ersten Fahrzeugs (410) und des zweiten Fahrzeugs (420) an das Fahrgastziel (FT),
wobei die Bestimmung auf mindestens einer der folgenden Positionen basiert:
der aktuellen Fahrgastposition (X0) und
der ersten aktuellen Position (X1) des ersten Fahrzeugs (410) und
der zweiten aktuellen Position (X2) des zweiten Fahrzeugs (420) und
einer aktuellen Route des ersten Fahrzeugs (410) und
einem Endziel (F1) des ersten Fahrzeugs (410) und
einer aktuellen Route des zweiten Fahrzeugs (420) und
einem Endziel (F2) des zweiten Fahrzeugs (420) und
einem oder mehreren ersten Parametern (B1, B2, B3, M, E2, E3, E4, E5) der Transportoption (TO), wobei die ersten Parameter (B1, B2, B3, M, E2, E3, E4, E5) von dem ersten Fahrzeug (410) an den Server (300) übertragen werden, und
einem oder mehreren zweiten Parametern (B1, B2, B3, M, E2, E3, E4, E5) der Transportoption (TO), wobei die zweiten Parameter (B1, B2, B3, M, E2, E3, E4, E5) von dem zweiten Fahrzeug (420) an den Server (300) übertragen werden,
Anzeigen der Transportoption (TO) zur Eingabe einer Auswahl (SC).

3. Verfahren nach Anspruch 2, wobei einer der ersten Parameter (B1, B2, B3, M, E2, E3, E4, E5) und/oder einer der zweiten Parameter (B1, B2, B3, M, E2, E3, E4, E5) Folgendes enthält:
einen Moduswert (M) für einen privaten Modus (Mᵥ) ohne Transport von Fahrgästen oder einen öffentlichen Modus (M_{c}) mit Transport von Fahrgästen und/oder einen Entfernungswert (E5) für einen maximalen Umweg und/oder einen Belegungswert (B1, B2, B3) für eine Anzahl leerstehender Transportplätze (101, 102, 103) des Fahrzeugs (100, 410, 420) und/oder
einen Gruppenindex (E4) für eine Angliederung an eine bestimmte Personengruppe und/oder
ein einstellbares Profil (E2, E3) des Fahrers (209) für Präferenzen.

4. Verfahren nach einem der Ansprüche 2 oder 3, umfassend den folgenden Schritt:
Bestimmen der ersten Route (R1) und der zweiten Route (R2), wenn die Auswahleingabe (SC) bestimmt wird, und insbesondere, wenn eine erste Bestätigung (ACK1) von einem ersten Fahrer des ersten Fahrzeugs (410) und eine zweite Bestätigung (ACK2) von einem zweiten Fahrer des zweiten Fahrzeugs (420) bestimmt wird.

5. Verfahren nach einem der vorstehenden Ansprüche, umfassend die folgenden Schritte:
Ausgeben der Position (C) als erste Zwischenposition in einer ersten Routenführung der ersten Route (R1) und
Ausgeben der Position (C) als zweite Zwischenposition in einer zweiten Routenführung der zweiten Route (R2).

6. Verfahren nach einem der vorstehenden Ansprüche, umfassend den folgenden Schritt:
Ausgeben von Informationen an den Fahrgast (201), wobei die Informationen auf der Position (C) basieren, insbesondere von einem Zeitzählwert bis zum Erreichen der Position (C).

7. Verfahren nach Anspruch 1, umfassend die folgenden Schritte:
Anzeigen einer Karte und Anzeigen einer Mehrzahl von Transportoptionen (TO1, TO2, TO3, TO4, TO5, TO6, TO7, TO8) auf den Karten und
Auswählen einer der Transportoptionen (TO1, TO2, TO3, TO4, TO5, TO6, TO7, TO8) durch Berühren eines dieser zugeordneten Symbole auf der Karte.

8. Verfahren nach Anspruch 2 und 8, umfassend den folgenden Schritt:
Senden einer Anfrage an das erste Fahrzeug (410) für eine Bestätigung des Fahrers, wenn eine Transportoption (TO1) ausgewählt wird.

9. Verfahren nach Anspruch 2 und 8, umfassend den folgenden Schritt:
Senden einer Anfrage an das zweite Fahrzeug (420) für eine Bestätigung des Fahrers, wenn eine Transportoption (TO1) ausgewählt wird.

10. System zur Navigierung von Fahrzeugen (100, 410, 420, 430, 440, 450, 460), die zu einer Gemeinschaft (400) gehören und über eine Drahtlosverbindung (340) Daten mit einem Server (300) austauschen, wobei das System mindestens ein erstes Fahrzeug (410) und ein zweites Fahrzeug (420) und den Server (300) umfasst, der mit Hilfe einer Drahtlosdatenübertragung mit dem ersten Fahrzeug (410) und dem zweiten Fahrzeug (420) verbindbar ist,
wobei das erste Fahrzeug (410) derart konfiguriert ist, dass es eine erste aktuelle Position (X1) des ersten Fahrzeugs (410) an den Server (300) überträgt,
wobei das zweite Fahrzeug (420) derart konfiguriert ist, dass es eine zweite aktuelle Position (X2) des zweiten Fahrzeugs (420) an den Server (300) überträgt,
wobei der Server (300) derart konfiguriert ist, dass er eine erste Route (R1) und eine zweite Route (R2) bestimmt,
wobei die erste Route (R1) von der ersten aktuellen Position (X1) zu einem ersten Endziel (F1) des ersten Fahrzeugs (410) definiert ist,
wobei die zweite Route (R2) von der zweiten aktuellen Position (X2) zu einem zweiten Endziel (F2) des zweiten Fahrzeugs (420) definiert ist,
wobei eine Position (C) die erste Route (R1) und die zweite Route (R2) als Zwischenziel derart miteinander verbindet, dass ein Fahrgast (201) in der Lage ist, von dem ersten Fahrzeug (410) zu dem zweiten Fahrzeug (420) zu wechseln,
wobei die Position (C) in der ersten Route (R1) und in der zweiten Route (R2) enthalten ist,
wobei der Server (300) derart konfiguriert ist, dass er die erste Route (R1) an das erste Fahrzeug (410) und die zweite Route (R2) an das zweite Fahrzeug (420) überträgt, **dadurch gekennzeichnet, dass** die erste Einheit (410) eine Zentraleinheit umfasst, die derart konfiguriert ist, dass sie auf einer Anzeige der Zentraleinheit eine Karte mit der aktuellen Position des ersten Fahrzeugs (410) und der aktuellen Position des zweiten Fahrzeuges (420) anzeigt, die den Fahrgast (201) über den Wechsel der Fahrzeuge (410, 420) informiert, bevor die Position (C) erreicht ist, und
wobei der Server (300) derart konfiguriert ist, dass er eine Leerstellenzuordnung von Parkleerstellen für Fahrzeuge der Gemeinschaft (400) durch Verringern der zu Fuß zurückzulegenden Entfernungen zwischen den Zielen und den Positionen der Leerstellen für eine Mehrzahl von Fahrzeugen berechnet, die aneinander angrenzende Ziele aufweisen, und
wobei der Server (300) derart konfiguriert ist, dass er Positionen der Leerstellen in dem Bereich um das Zwischenziel (C) herum auf Grundlage der Leerstellenzuordnung an das erste Fahrzeug (410) und das zweite Fahrzeug (420) zur Navigation sendet.

## Revendications

1. Procédé pour la navigation de véhicules (100, 410, 420, 430, 440, 450, 460) avec au moins un premier véhicule (410) et un deuxième véhicule (420), dans lequel les véhicules (100, 410, 420, 430, 440, 450, 460) appartiennent à une communauté (400) et échangent des données avec un serveur (300) via une connexion sans fil (340), le procédé comprenant les étapes consistant à :
transmettre une première position en cours (X1) du premier véhicule (410) à partir du premier véhicule (410) au serveur (300),
transmettre une deuxième position en cours (X2) du deuxième véhicule (420) à partir du deuxième véhicule (420) au serveur (300),
déterminer un premier itinéraire (R1) et un deuxième itinéraire (R2) au moyen du serveur (300),
dans lequel le premier itinéraire (R1) est déterminé à partir de la première position en cours (X1) jusqu'à une première destination finale (F1) du premier véhicule (410),
dans lequel le deuxième itinéraire (R2) est déterminé à partir de la deuxième position en cours (X2) jusqu'à une deuxième destination finale (F2) du deuxième véhicule (420),
dans lequel un emplacement (C) relie le premier itinéraire (R1) et le deuxième itinéraire (R2), comme une escale en cours de destination de telle sorte qu'un passager (201) est en mesure de passer du premier véhicule (410) au deuxième véhicule (420),
dans lequel l'emplacement (C) est inclus dans le premier itinéraire (R1) et dans le deuxième itinéraire (R2),
transmettre le premier itinéraire (R1) au premier véhicule (410),
transmettre le deuxième itinéraire (R2) au deuxième véhicule (420),
**caractérisé en ce que** le procédé comprend en outre les étapes consistant à :
afficher, sur un écran d'une unité centrale du premier véhicule (410), la position en cours du premier véhicule (410) et la position en cours du deuxième véhicule (420), informant le passager (201) au sujet du changement de véhicules (410, 420) avant que l'emplacement (C) soit atteint, et
calculer une allocation de place vacante de places vacantes pour le stationnement pour les véhicules de la communauté (400) en minimisant les distances de marche entre les destinations et les positions des places vacantes pour une pluralité de véhicules ayant des destinations adjacentes les unes aux autres, et
transmettre les positions des places vacantes dans une zone autour de l'escale en cours de destination (C) sur la base de l'allocation de place vacante à partir du serveur (300) au premier véhicule (410) et au deuxième véhicule (420) pour la navigation.

2. Procédé selon la revendication 1, comprenant les étapes consistant à :
transmettre une demande (RQ) d'un dispositif (211) au serveur (300), la demande (RQ) contenant une position en cours de passager (X0) du passager (201) et une destination de passager (FT),
déterminer une option de transport (TO) d'un transport du passager (201) au moyen du premier véhicule (410) et du deuxième véhicule (420) jusqu'à la destination du passager (FT), la détermination étant basée sur au moins l'un de la position de passager en cours (X0) et
la première position en cours (X1) du premier véhicule (410) et
la deuxième position en cours (X2) du deuxième véhicule (420) et
un itinéraire en cours du premier véhicule (410) et
une destination finale (F1) du premier véhicule (410) et
un itinéraire en cours du deuxième véhicule (420) et
une destination finale (F2) du deuxième véhicule (420), et
un ou plusieurs premiers paramètres (B1, B2, B3, M, E2, E3, E4, E5) de l'option de transport (TO), les premiers paramètres (B1, B2, B3, M, E2, E3, E4, E5), étant transmis du premier véhicule (410) au serveur (300), et
un ou plusieurs deuxièmes paramètres (B1, B2, B3, M, E2, E3, E4, E5) de l'option de transport (TO), les deuxièmes paramètres (B1, B2, B3, M, E2, E3, E4, E5) étant transmis depuis le deuxième véhicule (420) au serveur (300),
affichant l'option de transport (TO) pour entrer une sélection (SC).

3. Procédé selon la revendication 2, l'un des premiers paramètres (B1, B2, B3, M, E2, E3, E4, E5) et/ou l'un des seconds paramètres (B1, B2, B3, M, E2, E3, E4, E5) contient
une valeur de mode (M) pour un mode privé (Mᵥ) sans transport de passagers ou un mode public (M_{c}) avec transport de passagers, et/ou
une valeur de distance (E5) pour un détour maximum et/ou
une valeur d'occupation (B1, B2, B3) pour un certain nombre de places de transport vacantes (101, 102, 103) du véhicule (100, 410, 420) et/ou
un indice de groupe (E4) pour une affiliation avec un groupe spécifique de personnes et/ou
un profil paramétrable (E2, E3) du conducteur (209) pour des préférences.

4. Procédé selon l'une des revendications 2 ou 3, comprenant l'étape consistant à :
déterminer le premier itinéraire (R1) et le deuxième itinéraire (R2), lorsque l'entrée de sélection (SC) est déterminée, et en particulier lorsqu'une première confirmation (ACK1) par un premier conducteur du premier véhicule (410) et une deuxième confirmation (ACK2) par un deuxième conducteur du deuxième véhicule (420) sont déterminées.

5. Procédé selon l'une quelconque des revendications précédentes, comprenant les étapes consistant à :
délivrer l'emplacement (C) comme la première escale dans un premier guidage d'itinéraire du premier itinéraire (R1), et
délivrer l'emplacement (C) comme la deuxième escale dans un deuxième guidage du deuxième itinéraire (R2).

6. Procédé selon l'une quelconque des revendications précédentes, comprenant l'étape consistant à :
envoyer des informations au passager (201), les informations étant basées sur l'emplacement (C), en particulier une valeur de comptage de temps jusqu'à ce que l'emplacement (C) soit atteint.

7. Procédé selon la revendication 1, comprenant les étapes consistant à :
afficher une carte et afficher une pluralité d'options de transport (TO1, TO2, TO3, TO4, TO5, TO6, TO7, TO8) sur les cartes, et
sélectionner l'une des options de transport (TO1, TO2, TO3, TO4, TO5, TO6, TO7, TO8) en touchant un symbole associé sur la carte.

8. Procédé selon les revendications 2 et 8 comprenant l'étape consistant à :
envoyer une requête au premier véhicule (410) pour la confirmation du conducteur, si une option de transport (TO1) est sélectionnée.

9. Procédé selon les revendications 2 et 8, comprenant l'étape consistant à :
envoyer une requête au deuxième véhicule (420) pour la confirmation du conducteur, si une option de transport (TO1) est sélectionnée.

10. Système pour la navigation de véhicules (100, 410, 420, 430, 440, 450, 460) appartenant à la communauté (400) et pour échanger des données avec un serveur (300) via une connexion sans fil (340), le système comprenant au moins un premier véhicule (410) et un deuxième véhicule (420), et le serveur (300) pouvant être connecté par l'intermédiaire d'une transmission de données sans fil à destination du premier véhicule (410) et du deuxième véhicule (420),
dans lequel le premier véhicule (410) est configuré pour transmettre une première position en cours (X1) du premier véhicule (410) au serveur (300),
dans lequel le deuxième véhicule (420) est configuré pour transmettre une deuxième position en cours (X2) du deuxième véhicule (420) au serveur (300),
dans lequel le serveur (300) est configuré pour déterminer un premier itinéraire (R1) et un deuxième itinéraire (R2), dans lequel le premier itinéraire (R1) est défini à partir de la première position en cours (X1) jusqu'à une première destination finale (F1) du premier véhicule (410),
dans lequel le deuxième itinéraire (R2) est défini à partir de la deuxième position en cours (X2) jusqu'à une deuxième destination finale (F2) du deuxième véhicule (420),
dans lequel un emplacement (C) relie le premier itinéraire (R1) et le deuxième itinéraire (R2), en tant qu'escale en cours de destination de telle sorte qu'un passager (201) soit en mesure de passer du premier véhicule (410) au deuxième véhicule (420),
dans lequel l'emplacement (C) est inclus dans le premier itinéraire (R1) et dans le deuxième itinéraire (R2),
dans lequel le serveur (300) est configuré pour transmettre le premier itinéraire (R1) au premier véhicule (410) et le deuxième itinéraire (R2) au deuxième véhicule (420),
**caractérisé en ce que** la première unité (410) comprend une unité centrale configurée pour afficher, sur un écran de l'unité centrale,
une carte de la position en cours du premier véhicule (410) et une position en cours du deuxième véhicule (420) informant le passager (201) au sujet du changement de véhicules (410, 420) avant que l'emplacement (C) soit atteint, et
dans lequel le serveur (300) est configuré pour calculer une allocation de place vacante de places vacantes pour le stationnement des véhicules de la communauté (400) en minimisant les distances de marche entre les destinations et les positions des places vacantes pour une pluralité de véhicules ayant des destinations adjacentes les unes aux autres, et
dans lequel le serveur (300) est configuré pour envoyer les positions des places vacantes dans une zone autour de l'escale en cours de destination (C) sur la base de l'allocation de place vacante au premier véhicule (410) et au deuxième véhicule (420) pour la navigation.
